# EUROPÄISCHE PATENTSCHRIFT

(11) **EP 0 595 024 B1**
(45) Veröffentlichungstag und Bekanntmachung des Hinweises auf die Patenterteilung: **12.11.1997**
(21) Anmeldenummer: 93115313.4
(22) Anmeldetag: 23.09.1993
(51) Int. Cl.: B03B 9/06

(54) **Verfahren und Anlage zur Wiederverwertung von Sportgeräten**
Method and plant for the recycling of sporting equipment
Procédé et installation pour le recyclage des appareils de sport

(30) Priorität: 28.10.1992 CH 3357/92; 22.03.1993 CH 860/93
(43) Veröffentlichungstag der Anmeldung: 04.05.1994
(73) Patentinhaber: SPORT-RECYCLING TECHNOLOGY AG, CH-6300 ZUG (CH)
(72) Erfinder: Alavi, Kamal, CH-6318 Walchwil (CH)
(74) Vertreter: OK pat AG

(56) Entgegenhaltungen:
- EP-A- 0 403 695
- DE-A- 3 347 230
- DE-A- 4 100 346
- DATABASE WPI Section EI, Week 8141, Derwent Publications Ltd., London, GB; Class X25, AN 81-K6517D/41 & SU-A-797 772 (SEC RESOURCES DES ET AL) 23. Januar 1981

## Beschreibung

Die Erfindung bezieht sich auf ein Verfahren nach dem Oberbegriff des Patentanspruchs 1 und eine Anlage nach dem Oberbegriff des Patentanspruchs 7.

Bei der Produktion von Sportgeräten allgemein werden beträchtliche Mengen von hochwertigen Werkstoffen verarbeitet, und solche Geräte verschiedener Art sind in grosser Zahl im Gebrauch. Beispielweise werden in jedem der Alpenländer jährlich mehrere hunderttausend Paar Ski und auch Skischuhe verkauft - allein in der Schweiz sind es rund 500'000 Paar Ski und 400'000 Paar Skischuhe. Entsprechende Mengen an solchen Geräten werden aber früher oder später auch wieder aus dem Gebrauch genommen, weil sie unbrauchbar geworden oder veraltet sind. Solche "unnützen" Ski, Skischuhe usw. werden bisher von den privaten Benützern irgendwie entsorgt, erfahrungsgemäss geLangen sie überwiegend als Sperrgut in die Kehrichtabfuhr. Diese Art der Entsorgung ist jedoch sehr unbefriedigend, weil dabei insgesamt ein grosses Transportvolumen beansprucht wird, in den Kehricht-Verbrennungsanlagen ein beträchtlicher Schadstoff-Ausstoss entsteht und natürlich auch die verwendeten Materialien verloren gehen.

Aus der **EP-A-0 403 695** ist es zwar verfahrens- und vorrichtungsmässig bekannt, bei der Wiederverwertung von elektronischem Geräteschrott nach einer Vorzerkleinerung aus dem dabei entstehenden Materialgemisch den Eisen-Anteil in einer magnetischen Trennstufe auszuscheiden, den verbleibenden nichtmagnetischen Anteil weiter zu zerkleinern und ihn daraufhin pneumatisch von Feinanteilen zu befreien. Das nach der Entfernung der Feinanteile verbleibende Materialgemisch enthält einerseits nichtmetallische, anderseits metallische jedoch nicht magnetische Partikel, und zwar mit verschiedensten Metallen wie Kupfer, Aluminium, Silber, Gold und anderen. Die weitere Separierung in ein erstes Gemisch von metallischen Partikeln und ein zweites Gemisch von nichtmetallischen Partikeln erfolgt durch mechanisch-physikalische Trennung, wobei keine reinen Metalle gewonnen werden, wie es für eine Wiederverwertung sinnvoll ist. Reine Metalle erhöt man bei diesem Verfahren erst in weiteren, nasschemischen Verfahrensschritten. Solche nasschemische Verfahren sind bekanntlich sehr aufwendig und ökologisch unvorteilhaft und sollten daher wenn möglich vermieden werden.

Demgegenüber offenbart die **DE-A-41 00 346** ein vielstufiges Verfahren ohne nasschemische Stufen, mit welchem im wesentlichen reine Endprodukte gewonnen werden können. Dieses Verfahren ist bestimmt zur mechanischen Aufbereitung von unsortiertem Geräteschrott, insbesondere aus elektrischen und elektronischen Geräten. Dies ist bei der Behandlung von elektronischem Geräteschrott gerechtfertigt, da aus solchem teilweise relativ kostbare Stoffe rezyklierbar sind, was bei Sportgeräteschrott nicht der Fall ist. Ungeeignet für die Behandlung von Sportgeräten im Sinne der Erfindung ist auch, dass der Magnetseparation eine Wirbelstromseparation folgt, bevor eine weitere Zerkleinerung stattfindet.

Die beiden genannten Druckschriften befassen sich mit Verfahren bzw. Anlagen zur Verarbeitung von Elektronikschrott, wozu sie sich zweifellos eignen. Bei der Verarbeitung von Sportgeräteschrott stellen sich jedoch andere Probleme; insbesondere fallen beim Sportartikelschrott keine wertvollen Stoffe wie Silber oder Gold an, so dass von aufwendigen Verfahren, mit vielen Stufen oder mit nasschemischen Stufen, wie sie oben beschrieben wurden, abgesehen werden muss, während dennoch die Gewinnung reiner Stoffe, insbesondere von Aluminium, angestrebt wird. Es muss somit festgestellt werden, dass für Sportartikelschrott geeignete Verfahren bisher nicht bekannt sind.

Der Erfindung liegt die Aufgabe zugrunde, die Nachteile der herkömmlichen, ungeordneten Entsorgung von Sportgeräten zu beseitigen und ein umweltgerechtes Verfahren zur gezielten Aufbereitung vorzuschlagen, welches eine weitgehende technische Wiederverwendung und -Verwertung der Werkstoffe ermöglicht. Diese Aufgabe wird erfindungsgemäss durch das im Patentanspruch 1 angegebene Verfahren gelöst.

Das Verfahren nach der Erfindung eignet sich insbesondere, wie bereits erwähnt, für Ski samt Bindung (alpin und Langlauf) und Skischuhe, aber auch für zahlreiche weitere Sportgeräte, die im wesentlichen aus Kunststoff und/oder Holz in Verbindung mit Metallteilen (vorwiegend Stahl und Aluminium) bestehen; als Beispiele seien Snowboards, Skateboards, Rodelschlitten, Schutzhelme, Tennisschläger usw. erwähnt. Ausserdem können Materialabfälle und Ausschussteile, die bei der Produktion solcher Geräte entstehen, nach dem gleichen Verfahren aufbereitet werden. Das vorgeschlagene Verfahren ist besonders umweltschonend, weil keine Verbrennung stattfindet und keine schädlichen Hilfsstoffe benötigt werden. Als besonderer Vorteil bezüglich Organisation der Entsorgung ist zu erwähnen, dass Geräte verschiedenster Art wahllos nebeneinander verarbeitet werden können, also keine aufwendige Vorsortierung in den Sammelstellen erforderlich ist.

Die Erfindung bezieht sich ferner auf eine AnLage zur Durchführung des erwähnten Verfahrens, wie sie im Patentanspruch 7 angegeben ist. Eine solche Anlage kann mit Vorteil mobil ausgeführt, z.B. in einem Strassenfahrzeug (Lastwagen oder Anhänger) eingebaut werden und an dezentralen Sammelstellen zum Einsatz kommen.

Besondere, zweckmässige Varianten des Verfahrens und der Anlage nach der Erfindung sind in den abhängigen Ansprüchen 2 bis 6 bzw. 8 bis 11 angegeben.

Nachstehend werden Ausführungsbeispiele der Erfindung in Verbindung mit der Zeichnung näher erläutert.
- Fig. 1: zeigt schematisch ein Flussschema zur Darstellung der Verfahrensschritte gemäss einem ersten Beispiel,
- Fig. 2: ist das Flusschema des Verfahrens gemäss einem zweiten Ausführungsbeispiel, und
- Fig. 3: ist das Schema einer entsprechenden, beispielsweisen AnLage zur Durchführung des Verfahrens nach Fig. 2.

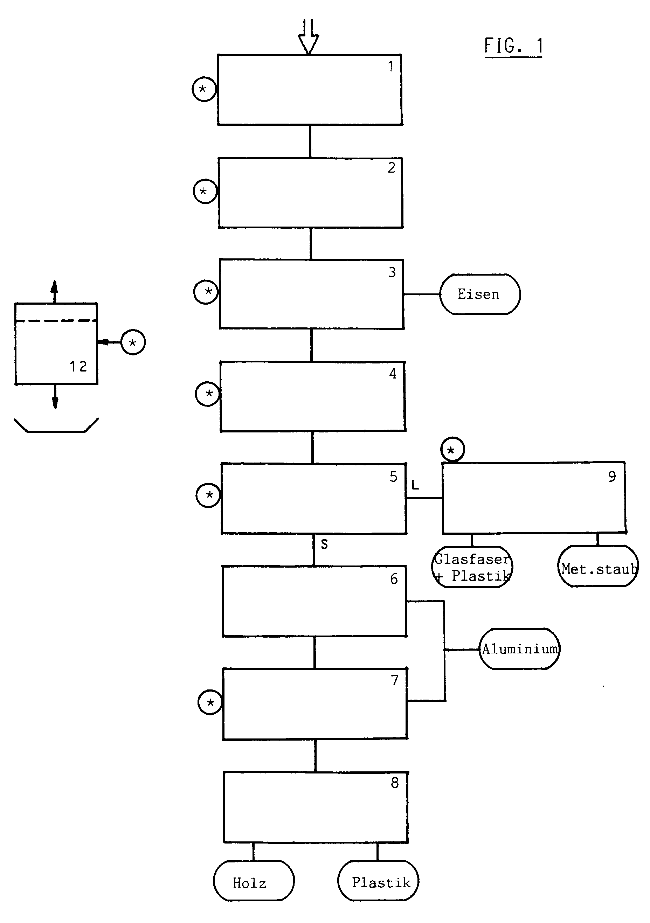

Im dargestellten Flussschema nach Fig. 1 verläuft der Materialfluss, wie angedeutet, von oben nach unten. Zur Vorzerkleinerung durchläuft das zu verarbeitende Gerätematerial einen Shredder 1, welcher Materialpartikel von etwa 15 bis 30 mm Liefert. Als weiteres Vorzerkleinerungsaggregat dient ein zweiter Shredder (Schneidmühle) 2, welcher die Partikel auf maximal etwa 10 mm zerkleinert. Nach dieser Vorzerkleinerung gelangt das Materialgemisch auf einen Magnetseparator 3, welcher als erste Trennstufe den Eisen-(Stahl-)Anteil ausscheidet.

Der verbleibende, nichtmagnetische Materialanteil durchläuft dann eine Schneidmühle 4, in welcher die Partikel weiter zerkleinert und aufgeschlossen werden. Für diese Nachzerkleinerung eigent sich besonders ein Kreuzscherenschnitt-Shredder (z.B. Typ "Rotoplex" der Alpine Aktiengesellschaft Augsburg) mit offenem Kreuzscherenschnitt-Rotor. In einer Schneidmühle dieser Art, auch als "Schleifshredder" bezeichnet, werden die Materialpartikel besonders gründlich aufgeschlossen und vor allem Metall- und Nichtmetall-Teile voneinander mechanisch getrennt. Für Ski sind besonders typisch z.b. Aluminiumteile mit anhaftendem Holz, Polyurethan-(PUR-)Schaum oder anderen Kuststoffen, Fiberglas, Farb- und Lacküberzügen. Bei dieser Nachzerkleinerung ergeben sich Partikel von höchstens etwa 5 bis 8 mm.

In einem pneumatischen Sichter 5, vorzugsweise einem sogenannten Zickzack-Sichter, wird sodann das aufgeschlossene Material von Leichtanteilen L befreit. Solche Leichtanteile enthalten - immer im Fall von zu verarbeitenden Ski - hauptsächlich Glasfasern und kleine Plastik- und Holzpartikel sowie grössere oder kleinere Anteile von Metallstaub. Sofern eine Wiederverwendung solcher Anteile beabsichtigt ist, kann es zweckmässig sein, die Leichtanteile L über einen elektrostatischen Separator 9 zu führen, welcher eine Trennung in nichtmetallische und metallische Partikel bewirkt. Eine besonders geeignete Weiterverarbeitung der Leichtanteile L wird weiter unten im Zusammenhang mit dem zweiten Ausführungsbeispiel näher beschrieben.

Der Schweranteil S aus dem pneumatischen Sichter 5 ist ebenfalls in Gemisch verschiedener Materialien, worin allerdings die (leichten) Glasfasern praktisch nicht vorkommen. Dieses Gemisch S wird weiter über einen Wirbelstrom-Separator 6 von an sich bekannter Bauart geleitet. Dieser liefert eine nichtmetallische und eine metallische, im wesentlichen Aluminium enthaltende Fraktion. Je nach Erfordernis bei der Wiederverwendung der Materialien wird es im allgemeinen zweckmässig sein, die Wirbelstrom-Separierung zur Nachreinigung der nichtmetallischen Fraktion durch eine elektrostatische Separierung zu ergänzen. Ein zu diesem Zweck dem Wirbelstrom-Separator 6 nachgeschalteter elektrostatischer Separator 7 scheidet in der nichtmetallischen Fraktion noch vorhandene Metallteile, insbesondere kleine Aluminium-Partikel, ab. In anderen Fällen bzw. bei geringeren Anforderungen an den Trennungsgrad kann eine elektrostatische Nachreinigung zwecks Metallausscheidung jedoch entfallen.

Die verbleibende nichtmetallische Fraktion enthält im wesentlichen noch Holz- und/oder Kuststoffpartikel, selbstverständlich mit wechselnden Anteilen je nach Ausgangsmaterial. Diese in der nichtmetallischen Fraktion enthaltenen Anteile werden schliesslich mittels Gewichts-Separierung getrennt, indem die Fraktion z.B. über eine Lufttisch-Trennmaschine 8 als Gewichts-Trennaggregat geleitet wird.

Manche der beschriebenen Verfahrensschritte sind mit Staubentwicklung verbunden, weshalb es sich empfiehlt, jedenfalls an den Aggregaten 1 bis 5 und 7 den entstehenden Staub pneumatisch abzusaugen, wie mit dem Symbol (*) angedeutet ist; die staubbefrachtete Luft wird über einen Luftfilter 12 geleitet, wobei der erwähnte Staub als Filter-Rückbehalt anfällt.

Mit dem vorstehend beschriebenen Verfahren wird durch rein mechanisch/physikalische Trennung ohne Hilfsstoffe eine schrittweise Trennung in Materialfraktionen von hohem Reinheitsgrad erzielt, was eine technische Wiederverwendung dieser Materialien ermöglicht. Versuchsweise wurden mit einem "Geräte-Mix" aus Holz- und Plastik-Ski samt Bindung sowie Skischuhen die nachstehenden Materialfraktionen gewonnen, wobei der erzielte Trennungsgrad (Reinheit der Fraktion) in % angegeben ist:

| | |
|---|---|
| - Eisen (Stahl) | 95 % |
| - Aluminium | 99 % |
| - Plastik (ABS, PE, PUR-Schaum) | 99 % (metallfrei) |
| - Fiberglas | 95 % (metallfrei, mit 5 % Plastik) |
| - Holz | 98 % |

Der Gewichtsanteil dieser Fraktionen zusammen betrug dabei rund 95 % des Ausgangsmaterials, d.h. als eigentlicher Abfall fielen Lediglich etwa 5 % an, hauptsächlich Filterstaub sowie Metallstaub aus dem Separator 9. Die vorstehenden Fraktionen Lassen sich beispielsweise wie folgt technisch verwerten:
- Eisen/Stahl als Schrott im Stahlwerk
- Aluminium kann dank erreichter Reinheit ebenfalls direkt zum Wiedereinschmelzen übernommen werden
- Das Plastikgranulat (Sortengemisch) kann dank fehlendem Metallgehalt bei der Fabrikation verschiedener, weniger anspruchsvoller Plastikteile eingesetzt werden
- Glasfasern (mit geringem Plastikanteil) können beispielsweise bei der vorgenannten Plastik-Wiederverwendung zur Materialverstärkung beigemengt werden
- Die Holzpartikel bestehen aus hochwertigen Holzsorten und ergeben, mit einem Kunststoff-Binder (Harz) verpresst, ein Spanplatten-Produkt von guter Qualität.

Bei einer ebenfalls versuchsweisen Verarbeitung eines Postens Holz- und Plastik-Skis ergab sich die folgende mengenmässige Aufteilung der Materialfraktionen:

| | |
|---|---|
| - Metalle (Al, Fe) | 43 % |
| - Kunststoffe | 32 % |
| - Holz | 14 % |
| - Glasfasern | 9 % |
| - Staub (Lacke etc.) | 2 % |

Aus der obenstehenden Beschreibung des Flussschemas nach Fig. 1 ergibt sich auch der beispielsweise Aufbau einer geeigneten Anlage zur Durchführung des Verfahrens, wobei die einzelnen Zer kleinerungs- bzw. Trennaggregate bezogen auf den Materialfluss hintereinander angeordnet werden.

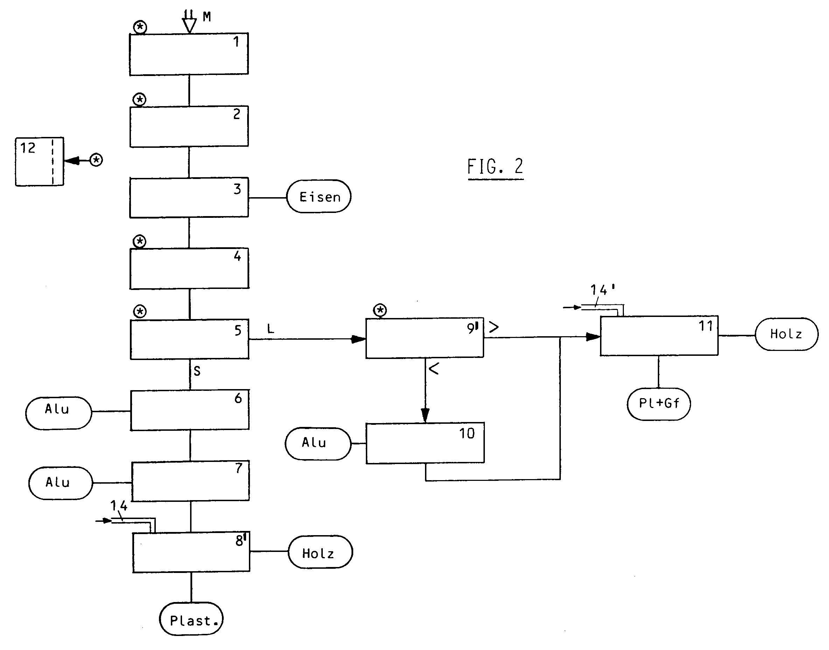

Das Verfahren in der Variante gemäss Fig. 2 kann in weiten Teilen mit demjenigen nach Fig. 1 übereinstimmen, jedoch unterscheidet es sich bezüglich der letzten Trennstufe für den Schweranteil S und ausserdem wird eine geeignete, weitgehende Trennung und Verwertung auch des Leichtanteils L beim Ausführungsbeispiel nach Fig. 2 beschrieben. Bezüglich der einleitenden Verfahrensschritte bis und mit Wirbelstromseparierung 6 und gegebenenfalls elektrostatischer Separierung 7 kann deshalb auf das weiter oben zur Fig. 1 Gesagte verwiesen werden.

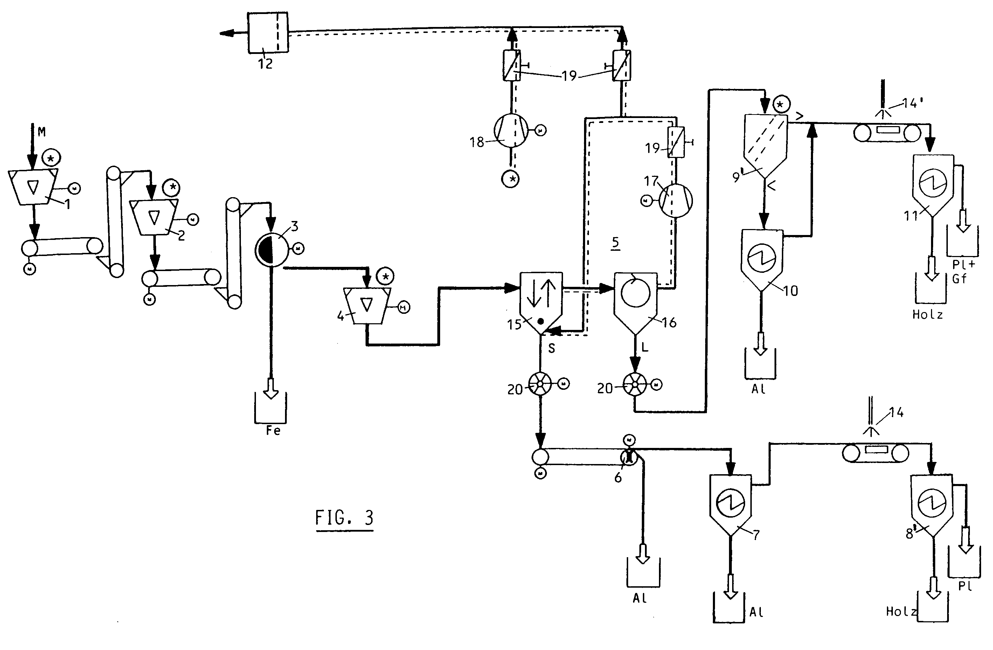

Gemäss Fig. 2 wird die verbleibende nichtmetallische Fraktion des Schweranteils S (Holz- und Kunststoff-Partikelgemisch) schliesslich mittels elektrostatischer Separierung 8' getrennt. Es hat sich überraschenderweise gezeigt, dass die beiden an sich nichtleitenden Materialien Holz und Kunststoff sich sauber elektrostatisch trennen lassen. Zu diesem Zweck wird das Partikelgemisch am Eingang zum Separator 8' durch Feuchtigkeits-Zugabe vorbehandelt, insbesondere durch Besprühen mit Wasserdampf oder -Nebel, wie bei 14 in Fig. 2 angedeutet. Auf diese Vorbehandlung wird im Zusammenhang mit der Fig. 3 noch näher eingegangen.

Die Leichtanteile L vom Sichter 5 werden gemäss der Variante nach Fig. 2 zunächst über ein Sieb 9' mit einer Maschenweite von etwa 1 mm geleitet. Die nicht durchfallenden, grösseren Partikel sind praktisch frei von Metall (Gemisch aus Kunststoffen und Holz, event. PUR-Schaum und grössere Glasfasern) und gelangen direkt zu einem elektrostatischen Separator 11. Im Leichtanteil L enthaltene, kleine Metallpartikel fallen zusammen mit nichtmetallischen Kleinpartikeln durch das Sieb 9' und gelangen zu einem elektrostatischen Separator 10. Dieser scheidet die Metallanteile (insbesondere Aluminium) aus, und der Nichtmetallanteil, hauptsächlich Holz und Glasfasern, kommt zum vorerwähnten Separator 11. Letzterer besorgt noch die Trennung der Nichtmetalle in Holz einerseits und Plastik/Glasfasern andererseits, ebenfalls nach Feuchtigkeits-Zugabe 14', analog wie beim elektrostatischen Separator 8'.

Das pneumatische Sammeln von Staub, der wie bei Fig. 1 einem Luftfilter 12 zugeleitet wird, ist wiederum bei den betreffenden Aggregaten mit dem Symbol (*) bezeichnet.

Die zum ersten Beispiel nach Fig. 1 genannten Vorteile und Zahlenangaben gelten auch für die Verfahrensvariante nach Fig. 2.

Im Anlage-Schema nach Fig. 3 sind die im Zusammenhang mit dem Diagramm nach Fig. 2 bereits erwähnten Aggregate mit gleichen Bezugszahlen bezeichnet. Die Aggregate 1 bis 4, ergänzt durch geeignete Fördermittel wie Transportbänder, Steigförderer oder dgl. bedürfen keiner zusätzlichen Erklärung.

Der pneumatische Sichter 5 besteht hier aus der Kombination eines sogenannten Zickzack-Sichters 15 (Schwerkraft-Gegenstrom-Abscheider) und eines Zyklons 16, verbunden über eine Umluftleitung mit Gebläse 17 und Einstellklappe 19. Aus dem zirkulierenden Luftstrom wird eine geringe, mit Staub befrachtete Teilmenge (z.B. 4 - 5 %) stetig abgezweigt und zum Luftfilter 12 geleitet. Im Zickzack-Sichter 15 werden die leichten Partikel im steigenden Luftstrom mitgeführt, während die schweren Teile S nach unten fallen. Die befrachtete Umluft gelangt dann in den Zyklon 16, wo der Leichtanteil L ausgeschieden wird.

Der Schweranteil S und der Leichtanteil L werden über je ein Zellenrad 20 weiterbefördert. Der Schweranteil wird über den Wirbelstrom-Separator 6 geführt, wo der Hauptanteil des Aluminiums, d.h. die gröberen Aluminiumteile, durch die Wirkung rasch rotierender Magnetfelder ausgeschieden wird. Noch vorhandene, geringere Metallanteile werden im nachfolgenden elektrostatischen Separator 7 abgetrennt, so dass ein Gemenge übrig bleibt, das nur noch aus Holz und Plastik besteht.

Die Trennung auch dieser beiden Komponenten des Schweranteils S erfolgt im elektrostatischen Separator 8', was nach Vorbehandlung durch Zugabe von Feuchtigkeit bei 14 gelingt. Das Aufsprühen von Wasserdampf oder -Nebel mittels entsprechender Düsen erfolgt zweckmässigerweise am Eingang zum Separator 8' über einem das Gemenge fördernden Transportband, unterstützt durch einen Vibrator; es kann auch ein Schwingförderer o. dgl. verwendet werden. Die im Gemenge enthaltenen Holzpartikel sollen dabei etwa 30-50 % Feuchtigkeit aufnehmen können. Vermöge der Porosität des Holzes wird die Feuchtigkeit von den Holzpartikeln aufgenommen, während bei den Plastik-Partikeln die Feuchtigkeit an der Oberfläche verbleibt. Es wird angenommen, dass dadurch das Holz - im Gegensatz zum Plastik - eine gewisse elektrische Leitfähigkeit erhält und die Partikel deshalb sich im Separator 8' entsprechend verhalten, was die saubere Trennung von Holz und Kunststoff ermöglicht. Die rotierende Trommel des Separators 8' sollte beheizt (ca. 40-50 °C) und belüftet sein, um eine Ansammlung der Feuchtigkeit zu verhindern.

Der Leichtanteil L vom pneumatischen Sichter 5 wird, wie erwähnt, über ein Rüttelsieb 9' geleitet. Die Feinfraktion, die einen gewissen Metallgehalt aufweist, wird im elektrostatischen Separator 10 getrennt, und der verbleibende metallfreie Anteil wird zusammen mit der (nichtmetallischen) Grobfraktion des Siebes 9' dem elektrostatischen Separator 11 zugeleitet. Hierbei kommt ebenfalls eine Feuchtigkeits-Vorbehandlung bei 14' zur Anwendung, für die das weiter oben zur Behandlung bei 14 Gesagte entsprechend gilt. Am Ausgang des Separators 11 wird somit eine weitgehend gereinigte Holz-Fraktion (allenfals mit geringen Mengen von Papier) und eine mehr oder weniger mit Glasfasern vermengte Plastik-Fraktion gewonnen; das letztgenannte, möglicherweise nicht weiter verwendbare Plastik-Glasfaser-Gemenge macht nur einen geringen Anteil (typischerweise etwa 5 %) des Gesamtgewichtes des eingegebenen Materials M aus.

Die Staub-Absaugstellen in der Anlage nach Fig. 3 sind wiederum mit (*) und der zugehörige Ventilator mit 18 bezeichnet.

Zur beschriebenen Anlage ist noch zu erwähnen, dass diese zum Betrieb lediglich eine Stromversorgung für den Antrieb der einzelnen Aggregate sowie geringe Mengen Wasser benötigt. Eine solche Anlage - z.B. mit einer Verarbeitungskapazität von etwa 200 bis 300 kg/h (entsprechend etwa 100 Paar Ski) - kann mit Vorteil als mobile Anlage, z.B. in einem Strassenfahrzeug eingebaut, ausgeführt werden. Auf diese Weise können dann mehrere geographisch verteilte Sammelstellen nach Bedarf nacheinander bedient und die gewonnenen Materialfraktionen zur Wiederverwertung abtransportiert werden. Der Betrieb einer solchen Anlage stellt technisch nur geringe Anforderungen, ist umweltverträglich und verursacht niedrige Betriebskosten.

## Patentansprüche

1. Verfahren zur Wiederverwertung von Sportgeräten, insbesondere von gebrauchten Ski, sowie von bei deren Produktion anfallendem Abfall und Ausschuss,
wobei
- eine Vorzerkleinerung des Sportgerätematerials stattfindet, nach welcher
- aus dem Materialgemisch der Eisen-Anteil in einer magnetischen Trennstufe (**3**) ausgeschieden wird,
- der verbleibende nichtmagnetische Anteil in einer Schneidmühle (**4**) weiter zerkleinert und aufgeschlossen wird und daraufhin
- in einer pneumatischen Trenn-Einrichtung (**5**) von Feinanteilen befreit wird,
**dadurch gekennzeichnet**,
- dass der verbleibende Schweranteil (**S**) mindestens mittels Wirbelstrom-Separierung (**6**) in eine metallische Fraktion, insbesondere Aluminium-Fraktion, und in eine nichtmetallische Fraktion getrennt wird, und
- dass in der nichtmetallischen Fraktion enthaltene Holz- und Kunststoffanteile mittels Gewichts-Separierung (**8**) oder elektrostatischer Separierung (**8'**) getrennt werden.

2. Verfahren nach Patentanspruch **1**,
**dadurch gekennzeichnet**,
dass die aus der pneumatischen Trenn-Einrichtung (**5**) anfallenden Leichtanteile (**L**) mittels weiterer elektrostatischer Separierung (**9, 9', 10**) einerseits in metallische Partikel und anderseits in nichtmetallische Partikel, insbesondere Glasfaser-, Kunststoff- und Holzpartikel, getrennt werden.

3. Verfahren nach Patentanspruch **2**,
**dadurch gekennzeichnet**,
dass die nichtmetallischen Partikel einer nochmaligen elektrostatischen Separierung (**11**) zur Trennung von Holz einerseits und Kunststoff und/oder Glasfasern anderseits unterworfen werden.

4. Verfahren nach Patentanspruch **3,**
**dadurch gekennzeichnet**,
dass zur nochmaligen elektrostatischen Separierung (**11**) das Materialgemisch durch Feuchtigkeitszugabe (**14'**) vorbehandelt wird.

5. Verfahren nach Patentanspruch **1**,
**dadurch gekennzeichnet**,
dass die bei der Wirbelstrom-Separierung (**6**) des Schweranteils (**S**) anfallende nichtmetallische Fraktion vor der genannten elektrostatischen Separierung (**8'**) mittels einer zusätzlichen elektrostatischen Separierung (**7**) getrennt wird, wobei metallische Feinanteile ausgeschieden werden.

6. Verfahren nach Patentanspruch **5**,
**dadurch gekennzeichnet**,
dass zur Separierung in der elektrostatischen Trennstufe (**8'**) das Materialgemisch durch Feuchtigkeitszugabe (**14**) vorbehandelt wird.

7. Anlage zur Durchführung des Verfahrens nach Patentanspruch **1**, welche, bezüglich des Materialflusses hintereinander angeordnet, ein Vorzerkleinerungsaggregat (**1, 2**), einen Magnetseparator (**3**), eine Nachzerkleinerungs-Scheidmühle (**4**) für den verbleibenden nicht magnetischen Anteil aus dem Magnetseparator (**3**) und einen pneumatischen Sichter (**5**) aufweist,
**dadurch gekennzeichnet**,
dass, dem pneumatischen Sichter (**15**) nachgeschaltet, ein Wirbelstrom-Separator (**6**) für die Trennung des aus dem Sichter (**5**) verbleibenden Schweranteils in eine metallische und in eine nichtmetallische Komponente und, dem Wirbelstrom-Separator (**6**) nachgeschaltet, eine Lufttisch-Trennmaschine (**8**) oder ein elektrostatischer Separator (**8'**) angeordnet sind.

8. Anlage nach Patentanspruch **7**,
**dadurch gekennzeichnet**,
dass die Nachzerkleinerungs-Schneidmühle (**4**) ein Kreuzscherenschnitt-Shredder ist.

9. Anlage nach Patentanspruch **7**,
**dadurch gekennzeichnet**,
dass dem pneumatischen Sichter (**5**) ein weiterer elektrostatischer Separator (**9**) zur Auftrennung der Leichtanteile beigeordnet ist.

10. Anlage nach Patentanspruch **7**,
**dadurch gekennzeichnet**,
dass dem elektrostatischen Separator (**8'**) und/oder einem zu einer nochmaligen Separierung des Leichtanteils (**L**) vorgesehenen elektrostatischen Separator (**11**) eine Sprüheinrichtung (**14 bzw. 14'**) zugeordnet ist für die Beigabe von Wasserdampf oder -nebel zum Materialgemisch.

11. Anlage nach einem der Patentansprüche **7 - 10**,
**dadurch gekennzeichnet**,
dass sie als mobile Anlage ausgebildet ist, vorzugsweise in einem Strassenfahrzeug eingebaut.

## Claims

1. Process for re-use of sport equipment, in particular used skis, as well as waste and surplus developing during their manufacture, in which
- a pre-reduction of the sport equipment material is carried out, whereafter
- the iron content of the material mixture is separated in a magnetic separating stage (3);
- the remaining non-magnetic content is reduced further and broken up in a cutting mill (4) and thereafter
- in a pneumatic separating device (5) freed of fine particles,
**characterized in that**
- that the remaining heavy portion (S) is separated by way of whirlflow separation (6) at least into a metallic fraction, in particular an aluminum fraction, and into a non-metallic fraction, and
- wood and plastic contents in the non-metallic fraction are separated by way of weight separation (8) or electrostatic separation (8').

2. Process according to Patent Claim 1,
**characterised in that**
lightweight portions (L) occurring in the pneumatic separating device (5) are separated by further electrostatic separation (9, 9', 10) on the one hand into metallic particles and on the other hand into non-metallic particles, in particular fibre glass, plastic and wood particles.

3. Process according to Patent Claim 2,
**characterised in that**
the non-metallic particles are again subjected to electrostatic separation (11) for the purpose of separating on the one hand wood and on the other hand plastic and/or glass fibres.

4. Process according to Patent Claim 3,
**characterised in that**
the material mixture is pre-treated by an addition of moisture (14') for the purpose of a further electrostatic separation (11).

5. Process according to Patent Claim 1,
**characterised in that**
the non-metallic fraction occurring during whirlflow separation (6) of the heavy portion (S) is prior to said electrostatic separation (8') separated by means of an additional electrostatic separation (7) whilst metallic fine particles are discharged.

6. Process according to Patent Claim 5,
**characterised in that**
the material mixture is pre-treated by an addition of moisture (14) for the purpose of separation in the electrostatic separating stage (8')

7. Plant for carrying out the process according to Patent Claim 1, comprising in series, relative to the material flow, a pre-reducing aggregate (1, 2), a magnetic separator (3), a post-reduction cutting mill (4) for the remaining non-magnetic portion from the magnetic separator (3) and a pneumatic classifier (5),
**characterised in that**
downstream of the pneumatic classifier (15) is a whirlflow separator (6) for separation of heavy parts remaining after the classifier (5) into a metallic and a non-metallic component and, downstream of the whirlflow separator (6), is an air-table separating machine (8) or an electrostatic separator (8').

8. Plant according to Patent Claim 7,
**characterised in that**
the post-reduction cutting mill (4) is a cross-shears shredder.

9. Plant according to Patent Claim 7,
**characterised in that**
the pneumatic classifier (5) is associated with a further electrostatic separator (9) for breaking up light portions.

10. Plant according to Patent Claim 7,
**characterised in that**
the electrostatic separator (8') and/or an electrostatic separator (11) provided for further separation of the light portion (L) is/are associated with a spraying device (14 or 14') to add water vapour or mist to the material mixture.

11. Plant according to one of Patent Claims 7 - 10,
**characterised in that**
it is designed as a mobile plant, preferably installed in a road vehicle.

## Revendications

1. Procédé de recyclage d'appareils de sport, notamment de skis usagés, ainsi que des déchets et rebuts, qui apparaissent lors de leur fabrication, selon lequel
- on exécute une fragmentation préalable du matériel des appareils de sport, à la suite de quoi
- on sépare du mélange de matériaux la partie constituée de fer, dans un étage de séparation magnétique (3),
- on réalise une fragmentation supplémentaire et une désagrégation de la partie non magnétique restante dans un broyeur à couteaux (4) et ensuite
- on élimine les composants fins dans un dispositif de séparation pneumatique (5),
caractérisé en ce
- qu'on sépare la partie lourde restante (S) au moins à l'aide d'un système (6) de séparation à courant tourbillonnaire, en une fraction métallique, notamment une fraction d'aluminium, et en une fraction non métallique,
et
- on sépare des composants de bois et de matières plastiques, contenus dans la fraction non métallique, à l'aide d'une séparation gravimétrique (8) ou à l'aide d'une séparation électrostatique (8').

2. Procédé selon la revendication 1, caractérisé en ce
qu'on sépare les parties légères (L), qui sortent du dispositif de séparation pneumatique (5), à l'aide d'une séparation électrostatique supplémentaire (9,9',10), d'une part en des particules métalliques et d'autre part en des particules non métalliques, notamment des particules de fibres de verre, des particules de matières plastiques et des particules de bois.

3. Procédé selon la revendication 2, caractérisé en ce
qu'on soumet les particules non métalliques à une nouvelle séparation électrostatique (11) pour séparer le bois d'une part et la matière plastique et/ou les fibres de verre d'autre part.

4. Procédé selon la revendication 3, caractérisé en ce
que pour la nouvelle séparation électrostatique (11), on applique un traitement préalable au mélange de matériaux au moyen d'une addition d'humidité (14').

5. Procédé selon la revendication 1, caractérisé en ce
qu'on sépare la fraction non métallique, qui résultent de la séparation (6) par écoulement tourbillonnaire, de la partie lourde (S), avant ladite séparation électrostatique (8'), à l'aide d'une séparation électrostatique supplémentaire (7), en obtenant la séparation de parties fines métalliques.

6. Procédé selon la revendication 5, caractérisé en ce que
pour la séparation dans l'étage de séparation électrostatique (8'), on applique un traitement préalable au mélange de matériaux par addition d'humidité (14).

7. Installation pour la mise en oeuvre du procédé selon la revendication 1, qui comprend, disposés les uns derrière les autres dans le sens du flux du matériau, une unité de fragmentation préalable (1,2), un séparateur magnétique (3), un broyeur à couteaux de post-fragmentation (4) pour la partie non magnétique restante sortant du séparateur magnétique (3) et un séparateur pneumatique (5),
caractérisé en ce
qu'en aval du séparateur pneumatique (15) est monté un séparateur à courant tourbillonnaire (6) servant à séparer la partie lourde qui sort du séparateur (5) en un composant métallique et un composant non métallique, et qu'en aval du séparateur à courant tourbillonnaire (6) est monté un séparateur à table pneumatique (8) ou un séparateur électrostatique (8').

8. Installation selon la revendication 7 caractérisée en ce
que le broyeur à couteaux de post-fragmentation (4) est un shredder réalisant un découpage à cisaillement.

9. Installation selon la revendication 7, caractérisée en ce
qu'un autre séparateur électrostatique (9) servant à séparer les parties légères est disposé du côté du séparateur pneumatique (5).

10. Installation selon la revendication 7, caractérisée en ce
qu'au séparateur électrostatique (8') et/ou à un séparateur électrostatique (11) prévu pour réaliser une séparation supplémentaire de la partie légère (L) est associé un dispositif de pulvérisation (14 ou 14'), pour l'addition de vapeur d'eau ou d'un brouillard d'eau au mélange de matériaux.

11. Installation selon l'une des revendications 7-10,
caractérisée en ce
qu'elle est agencée sous la forme d'une installation mobile et de préférence est montée dans un véhicule routier.
